# NOUVEAU FASCICULE DE BREVET EUROPEEN

(11) **EP 0 876 240 B2**
(45) Date de publication et mention de la décision concernant l'opposition: **18.08.2004**
(45) Mention de la délivrance du brevet: 20.10.1999
(21) Numéro de dépôt: 97901142.6
(22) Date de dépôt: 22.01.1997
(51) Int. Cl.: B23Q 1/62, B23Q 11/14, B23Q 11/08

(54) **MACHINE-OUTIL D'USINAGE A GRANDE VITESSE DU TYPE PORTE-BROCHE**
HOCHGESCHWINDIGKEITSWERKZEUGMASCHINE MIT SPINDELTRÄGER
SPINDLE HOLDERTYPE MACHINE TOOL FOR HIGH-SPEED MACHINING

(30) Priorité: 23.01.1996 FR 9600912
(43) Date de publication de la demande: 11.11.1998
(73) Titulaire: COMAU SYSTEMES FRANCE S.A., 78190 Trappes (FR)
(72) Inventeur: AZEMA, André, F-81710 Saix (FR)
(74) Mandataire: Richebourg, Michel François
(86) Numéro de dépôt international: PCT/FR1997/000124
(87) Numéro de publication internationale: WO 1997/027026

(56) Documents cités:
- EP-A- 0 517 168
- EP-A- 0 614 724
- EP-A- 0 742 072
- WO-A-95/03913
- DE-A- 3 704 952
- US-A- 2 221 127
- US-A- 4 752 160
- Prospectus Ingersall High Velocity Module HVM 600

## Description

La présente invention a trait au domaine des machines-outils et concerne plus particulièrement des adaptations permettant d'assurer dans les meilleures conditions, les déplacements à grande vitesse selon trois axes X ,Y et Z, d'un coulant portant l'organe mobile d'usinage.

L'usinage à grande vitesse de pièces dans une machine-outil s'opère en général à partir d'outils rotatifs installés en bout d'un coulant lui-même monté mobile selon trois axes dont deux X, Y sont disposés dans un plan P(x,y) parallèle au plan d'usinage des pièces et dont le troisième Z est disposé dans un plan P(x,z) perpendiculaire au même plan d'usinage desdites pièces.

Pour une meilleure lecture de la description qui va suivre, le plan d'usinage des pièces sera supposé vertical, ce qui représente la majorité des cas de réalisation de cette catégorie de machines-outils dans le domaine de l'usinage dit à grande vitesse, de sorte que le plan P(x,y) des deux premiers axes X et Y est considéré vertical et le plan P(x,z) du troisième axe Z est considéré horizontal.

Une machine-outil d'usinage à grande vitesse comporte en général trois postes de travail principaux, à savoir :
- un poste d'usinage proprement dit comportant l'outil entraîné en rotation en bout du coulant et façonnant la pièce à usiner,
- un poste d'entraînement situé après le poste d'usinage et constitué d'un ensemble d'organes assurant notamment les déplacements X, Y et Z du coulant, lequel assure également le mouvement de rotation de l'outil porté en bout,
- et un poste de commande collaborant avec le poste d'entraînement en fonction d'un programme d'instructions préétablies pour organiser et assumer les différentes phases d'usinage de ladite pièce.

Dans de telles machines-outils, la structure logique de la machine est bâtie essentiellement autour du poste d'entraînement et notamment en fonction de l'agencement des rails guidant les déplacements rectilignes alternatifs du coulant selon les trois axes X, Y et Z. La conception traditionnelle du bâti d'une telle machine consiste à disposer :
- deux rails de guidage parallèles dans le plan horizontal P(x,z), pour autoriser les déplacements horizontaux transversaux dudit coulant selon l'axe X.
- deux rails de guidage parallèles dans le plan vertical P(x,y), pour autoriser les déplacements verticaux dudit coulant selon l'axe Y perpendiculairement à l'axe X,
- et deux rails de guidage parallèles dans le plan horizontal P(x,z), perpendiculairement aux rails des déplacements transversaux selon l'axe X, pour autoriser les déplacements horizontaux longitudinaux dudit coulant selon l'axe Z, perpendiculairement aux axes X et Y.

Les déplacements transversaux X et longitudinaux Z du coulant sont compris dans le contexte de l'invention par rapport à l'axe longitudinal de la machine le long duquel sont alignés les trois postes de travail.

Si un tel agencement ne fait l'objet actuellement d'aucune évolution dans le domaine des machines-outils, c'est que les organes mobiles sont généralement actionnés dans leur mouvement de translation par des moteurs électriques rotatifs coopérant avec des courroies et des engrenages pour convertir les mouvements tournants en mouvements linéaires. En outre, le problème d'encombrement au sol des machines-outils n'étant pas la principale préoccupation des constructeurs, cet agencement de structure logique trois axes n'a jamais été remis en cause dès lors qu'il offre une assise plus confortable du bâti au sol, notamment lorsque les organes composant la machine-outil tels que les cassettes d'outils, les moteurs, etc...sont volumineux et lourds.

Un nouveau concept de machines a été de proposer des machines dans lesquelles les deux rails horizontaux autorisant les déplacements (flèche X) le long de l'axe X sont disposés parallèlement l'un au dessus de l'autre dans le plan P(x,y). Les machines-outils décrites dans le brevet européen n° 0 614 724 et dans le brevet allemand n° 37 04 952 proposent une telle structure logique dans laquelle :
- deux rails de guidage transversaux disposés parallélement dans le plan vertical "P(x,y), autorisent les déplacements horizontaux transversaux (flèche X) dudit coulant selon l'axe X,
- deux rails de guidage latéraux disposés parallèlement dans le même plan vertical P(x,y), autorisant les déplacements verticaux (flèche Y) dudit coulant selon l'axe Y, perpendiculairement à l'axe X.
Les deux structures diffèrent en ce que celle décrite par le brevet européen ne comporte pas de rails ou de glissières lui permettant de mouvoir son outil perpendiculairement au plan P(x,y) c'est à dire selon l'axe Z. Aussi, c'est le porte-pièce qui comporte une cinématique lui permettant d'aller et venir perpendiculairement au plan de mouvement du coulant .
La structure proposée par le brevet allemand n° 37 04 952, quant à elle, propose un mouvement de l'outil selon l'axe Z mais d'une façon particulièrement non adéquate à l'usinage à grande vitesse et cela pour plusieurs raisons. D'une part, l'outil se trouve en bout d'un bras télescopique selon l'axe Z qui, moyen utilisé pour une course d'usinage particulièrement grande, facile à mettre en oeuvre pour un outil et un entraînement normal, est beaucoup plus difficilement applicable pour le mouvement d'une électrobroche porte-outil du fait de son poids (et dit porte-à-faux en conséquence), des liaisons hydrauliques et électriques suivant ses mouvements et des courses beaucoup plus courtes qui lui sont demandées. D'autre part, ce bras télescopique n'autorise le mouvement en Z et n'occupe l'espace de la structure logique que sur un seul demi-plan ou demi-axe Z ce qui a pour conséquence d'augmenter le volume d'une machine utilisant une telle structure.
Une autre différence existante entre les deux structures logiques précitées réside dans le fait que celle proposée par le brevet européen n°0 614 724 adopte comme moyen d'entraînement des moteurs linéaires afin d'assurer les déplacements selon les deux axes X et Y pour le coulant et selon l'axe Z pour le porte-pièce. Ces derniers sont particulièrement adaptés pour fournir les mouvements rapides et précis exigés par l'usinage d'aujourd'hui. Néanmoins, le coulant de la structure logique de ce brevet est fixe par rapport à l'axe Z et c'est le module porte-pièce qui, au moyen de moteurs linéaires, se déplace ou s'éloigne du coulant et de son outil. L'absence de mouvement sur l'axe Z est particulièrement limitatif pour une telle machine.

Une conception de machine est décrite dans le brevet américain n°4 752 160 qui met en oeuvre trois paires de rails disposés perpendiculairement les uns par rapport aux autres, afin d'autoriser le déplacement de l'outil selon les deux axes X et Y, d'un poste de travail à un autre alignés le long de l'axe X, de part et d'autre d'un poste de commande.

Le déplacement de l'outil est autorisé selon le mode de réalisation illustré de deux façons. D'une part, la structure logique portant l'outil et autorisant son déplacement selon l'axe Y se déplace sur une portion centrale de rails située en face du poste de commande qui est montée détachable par rapport aux longueurs restantes pour déplacer l'outil vers le poste de commande selon l'axe Z mais uniquement sur cette portion de longueur détachable de l'axe X. D'autre part, le coulant porte-outil se déplace selon l'axe Z au moyen de glissières sur lesquelles il coulisse, entraîné par un dispositif vis à bille mû par un moteur lié audit coulant.

Bien que proposant une structure cinématique autorisant un déplacement de l'outil sur trois axes, cette dernière présente plusieurs inconvénients, à savoir :
- La structure logique assure un guidage sur quatre glissières pour les mouvements selon l'axe Y et l'axe Z et ces quatre glissières exigent que la structure logique adopte pour ces deux mouvements là une géométrie parallélépipèdique qui alourdit la structure et augmente son volume. Le choix comme moyens de mouvements d'un dispositif du type vis à bille demande en effet la présence d'un nombre important de guidages pour éviter les coincements et gagner en précision,
- Ce choix d'actionneurs a non seulement l'inconvénient d'obliger la structure logique à s'alourdir mais aussi de ne pas répondre aux besoins inhérents à l'usinage rapide. Ainsi. les mouvements entre les différents usinages mouvements de changement d'outils ou de placement de celui-ci) doivent être ultra rapides ce que n'autorise pas cette structure logique du fait de sa lourdeur. De plus, un entraînement du type vis à bille n'apporte pas toujours la précision exigée aujourd'hui pour les usinages.

La demanderesse a mené des recherches ayant pour objet l'étude d'un nouveau concept de réalisation de structure logique du bâti d'une machine-outil à grande vitesse qui utilise des concepts classiques de mécanique dans sa réalisation, avec des critères spécifiques d'adaptation à l'installation d'organes légers et rapides. De ce fait, la présente invention intègre des critères originaux qui constituent un principe de conception d'une telle machine dont il résulte des avantages nouveaux parmi lesquels l'adéquation de la machine à sa destination particulière d'usinage à grande vitesse par un mode d'agencement préféré des rails de guidage des mouvements de translation des organes mobiles selon les trois axes de déplacement X, Y et Z.

Pour respecter les objectifs recherchés d'un usinage à grande vitesse, il a donc été imaginé une machine-outil autorisant les déplacements d'un organe mobile selon trois axes X, Y et Z, et définie selon la revendication 1.

L'arrangement inédit tel que revendiqué offre de nombreux autres avantages et parmi ceux-ci :
- une augmentation notable de la rigidité de la structure logique,
- un rapprochement des masses mobiles par rapport à un plan vertical,
- un encombrement au sol extrêmement réduit,
- une possibilité d'allégement de la structure des éléments-supports des de guidage,
- etc....

En outre, la disposition des deux rails de guidage longitudinaux parallèles dans le plan horizontal P(x,z) et autorisant les déplacements horizontaux longitudinaux dudit coulant selon l'axe Z soient situés de part et d'autre du plan vertical P(x,y) des axes X et Y, permet d'avoir le centre de gravité des masses mobiles est sur l'axe Z au plus prés du plan vertical P(x,y).

Cette machine-outil est à cet effet constituée d'un bâti se composant d'un châssis-support ouvert en son centre agencé dans un plan vertical P(x,y) d'une paire de rails transversaux horizontaux parallèles autorisant, entre eux et selon un mouvement horizontal transversal le long de l'axe X, un coulissement d'une table verticale ouverte en son centre formant cadre-support. Cette table verticale est bordée latéralement d'une paire de rails verticaux parallèles disposées perpendiculairement à la première paire de rails transversaux et sur lesquels coulisse, entre eux et selon un mouvement vertical le long de l'axe Y, une poupée. Cette poupée est bordée latéralement d'une troisième paire de rails horizontaux longitudinaux disposés de part et d'autre du plan vertical P(x,y) perpendiculairement à la première paire de rails horizontaux transversaux et à la deuxième paire de rails verticaux latéraux parallèles pour autoriser, entre eux et selon un mouvement horizontal (flèche Z) porté par l'axe Z, le coulissement (flèche Z) du susdit coulant porte-broche, de part et d'autre du plan (P x,y). L'architecture particulière de cette machine est d'obtenir une configuration générale symétrique permettant notamment :
- de disposer de l'aire d'accès et/ou de dégagement à droite ou à gauche de la machine,
- d'accoler plusieurs machines latéralement,
- d'occuper une surface au sol réduite de l'ordre de 1600 mm en largeur autorisant une intégration de la machine dans une unité de transfert d'un pas de 800 mm,
- etc...

Selon un mode de réalisation préférée de l'invention, la table verticale et la poupée assurant le support des deux paires de rails de guidage selon les deux axes Y et Z sont façonnées dans de l'aluminium qui, tout en établissant un rapport très équilibré entre l'allégement des masses mobiles et la rigidité de l'ensemble de la structure mobile, permet d'obtenir des accélérations élevées des masses mobiles.

L'architecture particulière des trois paires de rails guidant la mobilité des organes le long des trois axes X, Y et Z de la structure logique de cette machine-outil est en outre particulièrement indiquée pour l'adoption de moteurs linéaires aux lieu et place des moteurs rotatifs, pour actionner les déplacements rectilignes alternatifs desdits organes mobiles selon les trois axes X, Y et Z, tout en permettant un arrangement très serré des rails de guidage et des mêmes moteurs linéaires.

Toujours pour respecter les contraintes de l' usinage à grande vitesse, un autre objet de l'invention est de limiter au maximum les dilatations et retraits des matériaux dus aux changements de températures.

Bien que les aspects principaux de l'invention considérés comme nouveaux aient été exprimés ci-dessus dans leur forme la plus élémentaire, de plus amples détails concernant un mode de réalisation préférée d'une machine-outil d'usinage du type porte-broche respectant les concepts fondamentaux de l'invention, seront mieux compris en se référant à la description ci-après et aux dessins l'accompagnant illustrant ce mode de réalisation. Sur ces dessins :
La figure 1 est une vue en perspective d'une telle machine avec la pièce à usiner disposée dans un plan vertical.
La figure 2 est une vue en perspective partiellement éclatée du poste d'entraînement d'une telle machine, dépouillée de son habillage.
La figure 3 est une vue de profil du même poste d'entraînement.
La figure 4 est une vue en perspective d'une telle machine comportant des moyens pour limiter les changements de températures dans la structure logique.

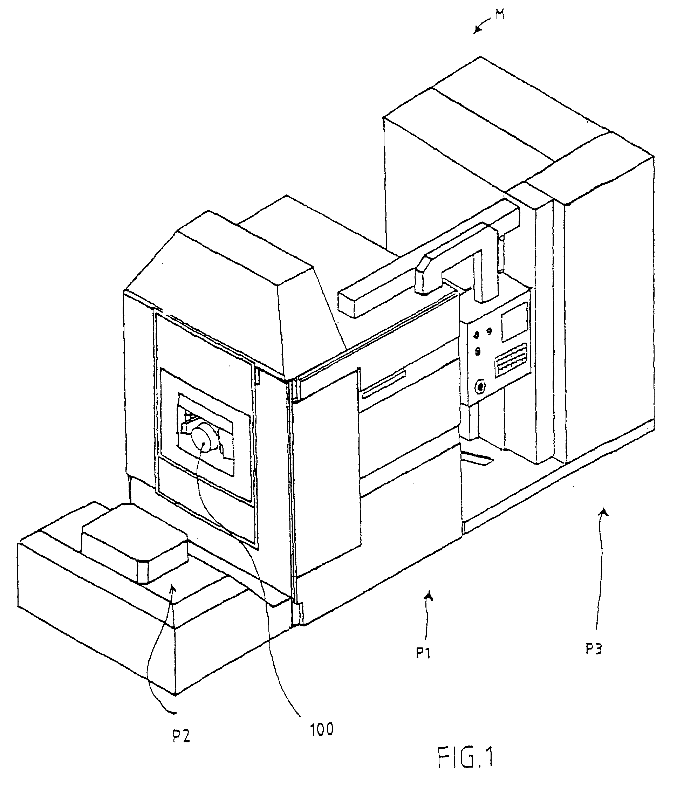

Comme on peut le voir sur le dessin de la figure 1, le poste d'entraînement P1 d'une machine-outil d'usinage à grande vitesse référencée M dans son ensemble est situé entre un poste d'usinage P2 non représenté comportant l'outil entraîné en rotation pour façonner la pièce à usiner et un poste de commande P3 collaborant avec le poste d'entraînement P2 en fonction d'un programme d'instructions préétablies pour organiser et assumer les différentes phases d'usinage de ladite pièce.

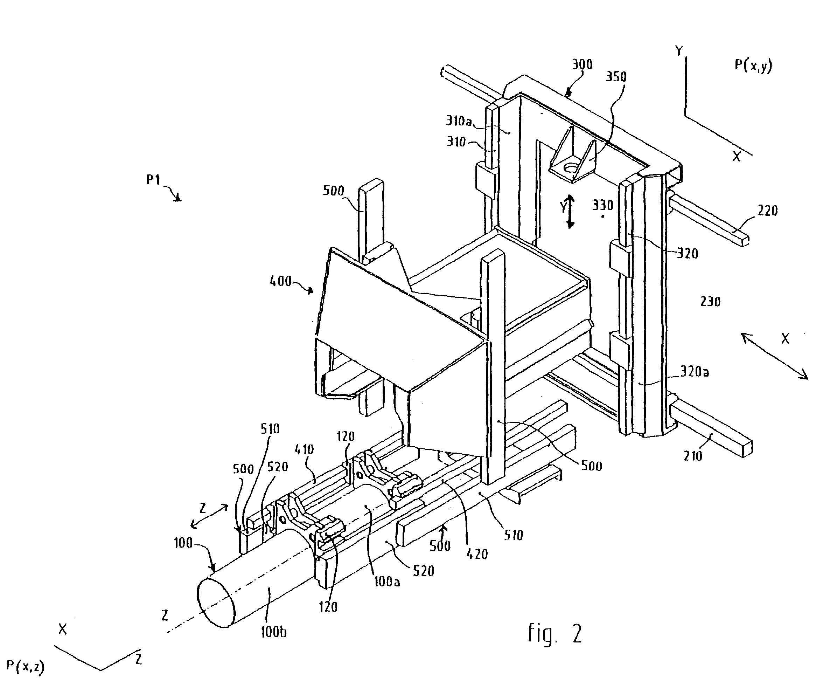

Le poste d'entraînement P1 est représenté sur le dessin de la figure 2 dépouillé de ses pièces d'habillage afin de mieux mettre en exergue la structure logique des différents organes nécessaires à son fonctionnement et notamment de ceux assurant les déplacements rectilignes alternatifs (flèches à double sens X, Y et Z) du coulant 100, lequel assure le mouvement de rotation de l'outil porté en bout.

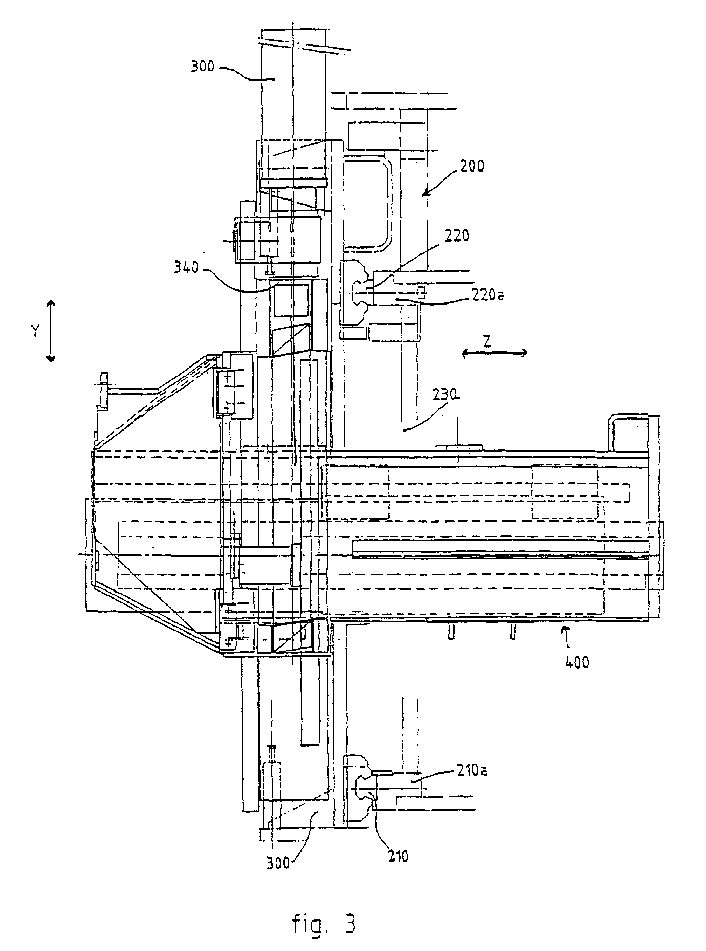

Suivant l'invention, la structure logique de ce poste d'entraînement P1 est constituée d'un châssis-support 200 (apparent partiellement sur le dessin de la figure 3) formant le bâti du poste P1. Ce châssis-support 200 est aménagé de deux longerons transversaux 210a et 220a destinés à supporter deux rails transversaux horizontaux parallèles 210 et 220 et délimitant entre eux une ouverture de passage 230 au travers dudit bâti. Ces deux rails transversaux 210 et 220 sont, suivant le concept fondamental de l'invention, dressés dans un plan vertical P(x,y) pour autoriser, selon un mouvement horizontal transversal porté par l'axe X, un coulissement (symbolisé par la flèche à double sens X) d'une table verticale 300. Cette dernière formant un cadre-support est bordée latéralement de deux montants latéraux 310a, 320a destinés à supporter une paire de rails latéraux parallèles 310 et 320 tout en dégageant entre eux une ouverture de passage 330 au travers dudit cadre-support 300 et communiquant avec l'ouverture 230 du bâti 200. Cette paire de rails latéraux 310 et 320 de la table 300 est disposée perpendiculairement à la première paire de rails transversaux 210 et 220 du bâti 200, pour autoriser, selon un mouvement vertical porté par l'axe Y, le coulissement (symbolisé par la flèche à double sens Y) d'une poupée mobile référencée 400. Ainsi, cette poupée 400 peut évoluer dans le plan vertical P(x,y) selon deux mouvements dont l'un (flèche X) est imprimé par la mobilité de la table verticale 300 le long des rails transversaux 210 et 220 solidaires du châssis-support 200 et dont l'autre (flèche Y) est imprimé par la mobilité de la poupée 400 le long des rails latéraux 310 et 320 associés à ladite table 300.

La poupée 400 est en outre traversée par le coulant porte-broche 100 qui coulisse (flèche à double sens Z) dans celle-ci, selon un mouvement horizontal longitudinal porté par l'axe Z, le long de deux rails longitudinaux horizontaux 410 et 420 garnissant l'intérieur de la poupée 400 et auxquels est suspendu ledit coulant 100.

Une disposition particulière de l'invention consiste à disposer la poupée 400 dans les ouvertures centrales 230 et 330 du châssis-support 200 et de la table verticale 300 respectivement comme mis en évidence sur le dessin de la figure 3, de sorte que le coulant 100 puisse évoluer le long de l'axe Z de part et d'autre du plan vertical P(x,y). Ainsi, la mobilité du coulant 100 selon les trois mouvements qu'illustrent les flèches X, Y et Z, est mise en oeuvre avec un rapprochement maximum des masses mobiles (coulant 100, poupée 400, table verticale 300) par rapport au plan vertical P(x,y) que délimitent les deux paires de rails 210, 220 et 310, 320.

Un autre objet de l'invention est de façonner la table verticale 300 et la poupée 400 dans de l'aluminium ce qui permet d'augmenter l'allégement de ces deux masses mobiles tout en gardant une rigidité suffisante de l'ensemble de la structure mobile.

Un autre objet de l'invention est d'assurer la mobilité des différents déplacements rectilignes alternatifs (flèches X, Y et Z) des organes mobiles (table 300, poupée 400 et coulant 100) au moyen de moteurs linéaires 500 convenablement agencés (un ou deux par déplacement) pour autoriser dans les meilleures conditions la cinématique desdits organes.

Par exemple, la table 300 est préférentiellement actionnée (flèche X) le long des rails transversaux 210 et 220 au moyen d'un seul moteur linéaire 500 installé au niveau du rail inférieur 210, sur le longeron transversal inférieur 210a. En effet, les rails 210 et 220 étant solidaires du bâti fixe 200, un moteur peut suffire pour imprimer les déplacements le long de l'axe X. De préférence le rail supérieur 220 servant de guidage est monté sans appui positif sur le talon sur le longeron transversal supérieur 220a du bâti 200 pour autoriser les différences de dilatation entre l'acier du rail 220 et l'aluminium de la table 300.

La poupée 400 est quant à elle actionnée (flèche Y) le long des rails 310 et 320 de la table 300 au moyen de deux moteurs linéaires 500 montés en opposition sur les deux montants latéraux 320a et 320b de ladite table 300 de part et d'autre de l'ouverture centrale 330. Afin de faciliter les mouvements ascendants le long de l'axe Y de la poupée 400, un vérin d'équilibrage 340 (cf. figure 3) est judicieusement calé dans une semelle 350 (cf. figure 2) associée à la traverse haute de la table 300, pour compenser les forces de gravité de la masse mobile de ladite poupée incluant le coulant et la broche.

Enfin, le coulant 100 est actionné (flèche Z) le long des rails longitudinaux 410 et 420 de la poupée 400 au moyen de deux moteurs linéaires 500 également disposés diamétralement opposés et au-dessous desdits rails de guidage, équilibrant ainsi les forces d'attraction magnétique et les déformations thermiques sur l'axe Z central du coulant 100 sur lequel se trouvent alignés le centre de gravité, la résultante de la poussée moteur et la résultante de la poussée de l'outil rotatif en bout du coulant 100. En outre, selon une disposition particulière de l'invention, les rails de guidage longitudinaux 410 et 420 et les blocs secondaires 510 des moteurs linéaires 500 associés à la poupée 400 s'étendent sur toute la longueur de cette dernière alors que les glissières 110 et 120 et les blocs primaires 520 des moteurs linéaires associés au coulant 100 ne s'étendent que sur une portion arrière 100a de ce dernier. Cette disposition est particulièrement avantageuse, car elle permet d'avoir une structure en porte-à-faux constant c'est à dire que du fait de la disposition des rails et des moteurs linéaires la charge est toujours la même au niveau des rails contrairement aux dispositions des autres dispositifs de glissement sur des rails qui ont eux un porte-à-faux progressif et proportionnel à la course du coulant ce qui est difficilement numérisable et donc se répercute sur la qualité de précision de l'usinage.

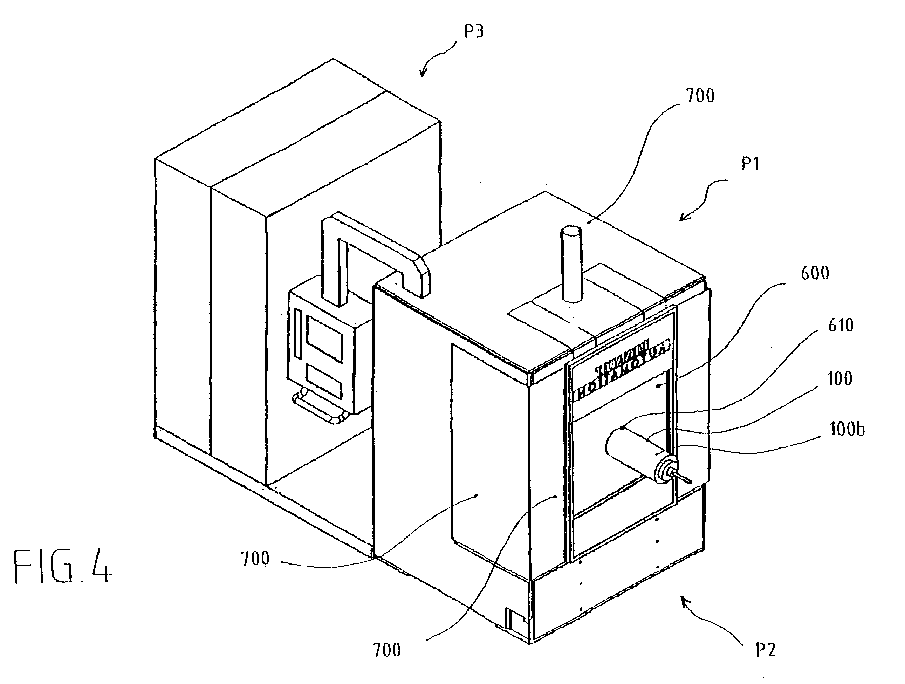

Comme illustré sur le dessin de la figure 4, la portion avant 100b dudit coulant 100 est brute d'organes d'entraînement et passe à travers un tablier télescopique vertical 600 suivant les évolutions du coulant 100 et séparant le poste d'entraînement P1 du poste d'usinage P2. Le fait que la partie 100b du coulant 100 se déplacant dans le poste d'usinage P2 soit brute d'organes de guidage permet de diminuer l'encombrement de l'organe mobile 100 dans ledit poste assurant ainsi plus d'espace pour les autres éléments liés à celui-ci comme par exemple la pièce à usiner, la table porte-pièces, le magasin d'outils. L'absence d'organes d'entraînement permet d'éviter que les copeaux et les liquides de refroidissement ou d'évacuation des copeaux ne viennent en contact avec lesdits organes qui, comme les moteurs linéaires y sont très sensibles.

Selon un choix particulièrement judicieux de la demanderesse, ladite portion avant 100b du coulant 100 est de forme cylindrique et passe dans un orifice circulaire 610 ménagé dans le tablier télescopique 600. Cette disposition a pour conséquence de simplifier considérablement le dispositif d'étanchéité nécessaire pour la liaison du coulant 100 avec le tablier télescopique vertical 600. Ainsi, selon un mode de réalisation particulièrement avantageux de l'invention, l'étanchéité de la liaison de glissement réalisée entre le coulant 100 et le tablier télescopique vertical 600 est assurée par un joint circulaire (non représenté).

La symétrie et la verticalité de la structure logique, objet de la présente invention, ont pour avantage d'améliorer la rigidité de l'ensemble, toujours pour atteindre une rigidité de structure optimale, laquelle comporte un jeu de plaques 700 liées entre elles et disposées autour de ladite structure logique de façon à former une enceinte étanche de protection thermique. En effet, les changements de température ont des conséquences néfastes sur la précision des usinages. Les cahiers des charges des machines-outils d'usinage à très grande vitesse demandant une précision de l'ordre du micron, il est particulièrement judicieux de créer un système adiabatique afin d'éviter toute dilatation ou retrait des matériaux constituant la structure logique, aussi minimes soient-ils.

Selon un mode de réalisation préférée de l'invention, les plaques 700 formant l'enceinte de protection thermique sont peintes sur leur surface extérieure avec une peinture de couleur blanche reflétant au maximum la lumière afin de diminuer l'absorption de quantité de chaleur par lesdites plaques et limiter ainsi les changements de températures.

Avantageusement, pour pallier aux changements de température liés aux éléments internes de la structure ou à des conditions de température dépassant les capacités d'isolation de l'enceinte, celle-ci comporte des moyens (non représentés) pour apporter et extraire des quantités de chaleur de façon à garder une température constante à l'intérieur de celle-ci.

On comprend que la machine qui vient d'être ci-dessus décrite et représentée, l'a été en vue d'une divulgation plutôt que d'une limitation. Bien entendu, divers aménagements, modifications et améliorations pourront être apportés à l'exemple ci-dessus, dans le cadre de l'invention comme défini dans les revendications.

Ainsi, comme précisé au début du présent mémoire, le plan d'usinage des pièces peut être disposé horizontalement de sorte que le plan P(x,y) des deux premiers axes X et Y est considéré horizontal et le plan P(x,z) du troisième axe Z est considéré vertical . Dans ce cas de figure, l'équilibrage sera opérationnel sur le coulant mobile verticalement.

Afin de permettre une meilleure compréhension des dessins, une liste des références avec leurs légendes est ci-après énumérée.
- M: Machine-outil du type porte-broche
- P1: Poste d'entraînement
- P2: Poste d'usinage
- P3: Poste de commande
- 100: Coulant porte-broche
- 100a: Portion arrière du coulant porte-broche
- 100b: Portion avant du coulant porte-broche
- 110,120: Glissières du coulant porte-broche
- 200: Châssis-support
- 210a, 220a: Longerons transversaux du bâti
- 210, 220: Rails de guidage transversaux du bâti
- 230: Ouverture de passage dans le châssis 200
- 300: Table verticale formant cadre-support
- 310a, 320a: Montants latéraux de la table 300
- 310, 320: Rails de guidage latéraux de la table 300
- 330: Ouverture de passage dans la table 300
- 340: Vérin d'équilibrage
- 350: Semelle de retenue du vérin d'équilibrage V
- 400: Poupée
- 410, 420: Rails de guidage longitudinaux de la poupée 400
- 500: Moteurs linéaires
- 510: Blocs secondaires des moteurs linéaires
- 520: Blocs primaires des moteurs linéaires
- 600: Tablier télescopique
- 610: Orifice circulaire de passage du coulant
- 700: Plaques constituant l'enceinte de protection thermique

- Flèche X: Mouvement le long de l'axe X
- Flèche Y: Mouvement le long de l'axe Y
- Flèche Z: Mouvement le long de l'axe Z

## Revendications

1. Machine-outil d'usinage à grande vitesse du type porte-broche dont le poste d'entraînement (P1) utilise une structure logique autorisant les déplacements d'un coulant porte-broche (100) le long des trois axes X, Y et Z, du type de celle constituée d'un bâti fixe se composant d'un châssis-support (200) agencé dans un plan vertical P(x,y) d'une paire de rails horizontaux transversaux parallèles (210 et 200) autorisant entre eux, selon un mouvement horizontal transversal le long de l'axe X, un coulissement d'une table verticale (300) formant cadre-support, laquelle table verticale (300) est bordée latéralement d'une deuxième paire de rails verticaux latéraux parallèles (310 et 320) disposés perpendiculairement à la première paire de rails horizontaux transversaux (210 et 220) pour autoriser entre eux, selon un mouvement vertical porté par l'axe Y, le coulissement d'une poupée (400), ladite structure logique évoluant à l'intérieur d'une enceinte de protection thermique comportant des moyens pour apporter et extraire des quantités de chaleur de façon à garder une température constante à l'intérieur de celle-ci, **CARACTERISEE PAR LE FAIT QUE** la susdite poupée est bordée latéralement d'une troisième paire de rails horizontaux longitudinaux (410 et 420) disposés de part et d'autre du plan vertical P(x,y) perpendiculairement à la première paire de rails horizontaux transversaux (210 et 220) et à la deuxième paire de rails verticaux latéraux parallèles (310 et 320) pour autoriser, entre eux et selon un mouvement horizontal porté par l'axe Z, le coulissement du susdit coulant porte-broche (100) de part et d'autre du plan (P x,y) **ET PAR LE FAIT QUE** le susdit coulant (100) est actionné le long des deux rails horizontaux longitudinaux (410 et 420) de la poupée (400) au moyen de deux moteurs linéaires (500) disposés diamétralement opposés et au-dessous desdits rails de guidage longitudinaux (410 et 420) auxquels ledit coulant est maintenu suspendu.

2. Machine-outil selon la revendication 1, **CARACTE-RISEE PAR LE FAIT QUE** le susdit châssis-support (200) comprend deux longerons transversaux (210a et 220a) qui, destinés à supporter lesdits deux rails horizontaux transversaux (210 et 220) de guidage de la table (300) le long de l'axe X, délimitent entre eux une ouverture de passage (230) de la poupée (400) au travers dudit châssis-support (200), **ET PAR LE FAIT QUE** la susdite table (300) comprend deux montants latéraux (310a et 320a) qui, destinés à supporter lesdits deux rails verticaux latéraux (310 et 320) de guidage de la poupée (400) le long de l'axe Y, délimitent entre eux une ouverture de passage (330) de la poupée (400) au travers de ladite table (300).

3. Machine-outil selon la revendication 1, **CARACTE-RISEE PAR LE FAIT QU**'un vérin d'équilibrage (340) est judicieusement calé dans une semelle (350) associée à la traverse haute de la table (300), pour compenser les forces de gravité de la masse mobile de ladite poupée (400) incluant le coulant (100) et la broche.

4. Machine-outil selon la revendication 1, **CARACTE-RISEE PAR LE FAIT QUE** la mobilité des différents déplacements rectilignes alternatifs de la table (300), de la poupée (400) et du coulant (100) est assurée au moyen de deux moteurs linéaires (500) pour chacun des déplacements.

5. Machine-outil selon la revendication 1, **CARACTE-RISEE PAR LE FAIT QUE** la susdite table (300) est actionnée le long des deux rails horizontaux transversaux (210 et 220) au moyen d'un seul moteur linéaire (500) installé au niveau du longeron inférieur (210a) porteur du rail inférieur (210), le rail supérieur (220) servant de guide étant monté sans appui positif sur le talon sur le longeron transversal supérieur (220a).

6. Machine-outil selon la revendication 1, **CARACTE-RISEE PAR LE FAIT QUE** la portion avant (100b) dudit coulant (100) est brute d'organes d'entraînement et passe à travers un tablier télescopique (600) suivant les évolutions du coulant et séparant le poste d'entraînement du poste d'usinage.

7. Machine-outil selon la revendication 4, **CARACTE-RISEE PAR LE FAIT QUE** la susdite poupée (400) est actionnée le long des deux rails verticaux latéraux (310 et 320) de la susdite table (300) au moyen de deux moteurs linéaires (500) montés en opposition sur les deux montants latéraux (320a et 320b) de ladite table (300), de part et d'autre de ladite ouverture centrale (330) **ET PAR LE FAIT QUE** les susdits rails de guidage longitudinaux (410 et 420) et les blocs secondaires (510) des deux moteurs linéaires (500) de la poupée (400) s'étendent sur toute la longueur de la poupée (400) alors que les glissières (110 et 120) coulissantes le long des rails et les blocs primaires (520) des mêmes moteurs linéaires sont associés audit coulant (100) sur une portion arrière (100a) de ce dernier.

8. Machine-outil selon la revendication 6, **CARACTE-RISEE PAR LE FAIT QUE** ladite portion avant (100b) du coulant (100) est de forme cylindrique et passe dans un orifice circulaire ménagé dans le tablier télescopique (600).

9. Machine-outil selon la revendication 8, **CARACTE-RISEE PAR LE FAIT QUE** l'étanchéité de la liaison de glissement réalisée entre le coulant (100) et le tablier télescopique (600) est assurée par un joint circulaire.

## Claims

1. Machine tool of the spindle holder type for high speed machining in which the drive station (P1) uses a logical design allowing movements of a spindle-carrier slide (100) along the three axes X, Y, Z of the type constituted by a fixed frame comprising a support chassis (200) made in a vertical plane P(x,y) from a pair of parallel transverse horizontal rails (210 and 220) allowing therebetween, along a transverse horizontal movement along axis X, a slide of a vertical table (300) forming a support framework, the said vertical table (300) is laterally borded by a second pair of parallel lateral vertical rails (310 and 320) arranged perpendical to the first pair of tranverse horizontal rails (210 and 220) to allow therebetween, along a vertical movement carried by axis Y, the slide of a headstock (400), the said logical design manoeuvring inside a heat-protection enclosure comprising means to supply and remove quantities of heat in order to maintain a constant temperature in the interior thereof, WHEREIN the said headstock is bordered laterally by a third pair of longitudinal horizontal rails (410 and 420) arranged one on each side of the vertical plane P(x,y) perpendicular to the first pair of transverse horizontal rails (210 and 220) and to the second pair of parallel lateral vertical rails (310 and 320) in order to allow the aforesaid spindle-carrier slide (100) to slide therebetween while straddling the plane P(x,y) in a horizontal movement directed in axis Z AND WHEREIN the aforesaid slide (100) is driven along the two longitudinal horizontal rails (410 and 420) of the headstock (400) by means of two linear motors (500) arranged diametrically opposite and below the said longitudinal guide rails (410 and 420) on which the said slide is kept suspended.

2. Machine tool according to claim 1, WHEREIN the aforesaid support chassis (200) comprises two transverse members (210a and 220a) which, being designed to support the said transverse horizontal rails (210 and 220) for guiding the table (300) along axis X, define between them an opening (230) for the passage of the headstock (400) through the said support chassis (200), AND WHEREIN the aforesaid table (300) comprises two lateral uprights (310a and 320a) which, being designed to support the said two lateral vertical rails (310 and 320) for guiding the headstock (400) along axis Y, define between them an opening (330) for passage of the headstock (400) through the said table.

3. Machine tool according to claim 1, WHEREIN a balancing jack (340) is judisciously wedged in a shoe (350) associated with the upper crossbeam of the table (300), to compensate for the gravitation forces of the moveable mass of the said headstock (400) including the slide (100) and the spindle.

4. Machine tool according to claim 1, WHEREIN the mobility of the different reciprocating rectilinear movements of the table (300), of the headstock (400) and of the slide (100) is ensured by means of two linear motors (500) for each of the movements.

5. Machine tool according to claim 1, WHEREIN the aforesaid table (300) is driven along the two transverse horizontal rails (210 and 220) by means of a single linear motor (500) installed at the level of the lower member (210a), carrying the lower rail (210), the upper rail (220) providing guidance being mounted without positively bearing on the heel of the upper transverse member (220a).

6. Machine tool according to claim 1, WHEREIN the front portion (100b) of the said slide (100) is unencumbered by drive mechanisms and passes through a telescopic cowling (600) which follows the manoeuvres of the slide and separates the drive station from the machining station.

7. Machine tool according to claim 4, WHEREIN the aforesaid headstock (400) is driven along two lateral vertical rails (310 and 320) of the aforesaid table (300) by means of two linear motors (500) mounted in diametrically opposite relationship, one on each side of the said central opening (330), on the two lateral uprights (320a and 320b) of the said table (300), and WHEREIN the aforesaid longitudinal guide rails (410 and 420) and the secondary blocks (510) of the two linear motors (500) of the headstock extend over the entire length of the headstock (400), while the slide blocks (110 and 120) sliding along the rails and the primary blocks (520) of the same linear motors are associated with the said slide (100) over a rear portion (100a) thereof.

8. Machine tool according to claim 6, WHEREIN the said front portion (100b) of the slide has a cylindrical shape and passes into a circular orifice provided in the telescopic cowling (600).

9. Machine tool according to claim 8, WHEREIN leaktightness of the sliding joint formed between the slide (100) and the telescopic cowling (600) is ensured by an O-ring.

## Patentansprüche

1. Hochgeschwindigkeits-Werkzeugmaschine mit Spindelträger, bei der die Antriebsstation (P1) eine Struktur des Aufbaus aufweist, welche die Verschiebungen eines Spindelträger-Schlittens (100) entlang der drei Achsen X, Y und Z ermöglicht und die aus einem feststehenden Aufbau besteht, der ein Traggestell (200) aufweist, welches in einer senkrechten Ebene P(x,y) ausgerichtet ist sowie aus einem Paar waagrechter parallel zueinander in Querrichtung angeordneter Schienen (210 und 200), welche zwischen sich eine waagrechte Querbewegung entlang der X-Achse ermöglichen sowie das Verschieben eines senkrechten Tisches (300), der einen Tragrahmen bildet, wobei der senkrechte Tisch (300) seitlich durch ein zweites Paar senkrechter seitlicher parallel zueinander angeordneter Schienen (310 und 320) begrenzt wird, die senkrecht zum ersten waagrechten quer verlaufenden Schienenpaar (210 und 220) angeordnet sind, um zwischen sich eine senkrechte Verschiebung entlang der Y-Achse eines Spindelkastens (400) zu ermöglichen, wobei die Struktur im Inneren eines thermischen Schutzraumes beweglich ist, welche eine Anordnung aufweist, um Wärmemengen zuzuführen und abzuführen, sodass eine konstante Temperatur in seinem Inneren herrscht, **dadurch gekennzeichnet, dass** der Spindelkasten seitlich durch ein drittes Paar waagrechter längs verlaufender Schienen (410 und 420) begrenzt ist, die beidseits der senkrechten Ebene P(x,y) und senkrecht zum ersten waagrechten quer verlaufenden Schienenpaar (210 und 220) angeordnet sind sowie zum zweiten Paar senkrechter seitlich verlaufender parallel zueinander angeordneter Schienen (310 und 320), um zwischen sich das waagrechte Verschieben entlang der Achse Z des Spindelträger-Schlittens (100) zu ermöglichen beidseits der Ebene P(x,y) und **dadurch gekennzeichnet, dass** der Schlitten (100) entlang der beiden waagrechten längs verlaufenden Schienen (410 und 420) des Spindelkastens (400) betätigt wird mittels zweier Linearmotoren (500), die einander gegenüberliegen und unterhalb der längs verlaufenden Führungsschienen (410 und 420) angeordnet sind, von denen der Schlitten getragen wird.

2. Werkzeugmaschine nach Anspruch 1, **dadurch gekennzeichnet, dass** das genannte Traggestell (200) zwei Querbalken (210a und 220a) aufweist zur Abstützung der beiden waagrechten quer verlaufenden Führungsschienen (210 und 220) für den Tisch (300) entlang der Achse X, wobei sie zwischen sich eine Durchlaßöffnung (230) für den Spindelkasten (400) begrenzen quer zum Traggestell (200) und **dadurch gekennzeichnet, dass** der genannte Tisch (300) zwei seitliche Stützen (310a und 320a) aufweist, die zur Abstützung der beiden senkrechten längs verlaufenden Führungsschienen (310 und 320) für den Spindelkasten (400) entlang der Y-Achse dienen, wobei sie zwischen sich eine Durchlaßöffnung (330) für den Spindelkasten (400) durch den Tisch (300 begrenzen.

3. Werkzeugmaschine nach Anspruch 1, **dadurch gekennzeichnet, dass** ein Ausgleichszylinder (340) in einen Flansch (350) genau eingesteckt ist, welcher der oberen Traverse des Tisches (300) zugeordnet ist, um die Schwerkraft der beweglichen Masse des Spindelkastens (400) einschließlich des Schlittens (100) und der Spindel zu kompensieren.

4. Werkzeugmaschine nach Anspruch 1, **dadurch gekennzeichnet, dass** die Beweglichkeit der verschiedenen geradlinigen hin- und hergehenden Verschiebungen des Tisches (300) des Spindelkastens (400) und des Schlittens (100) gewährleistet wird durch Linearmotoren (500) für jede der Verschiebungen.

5. Werkzeugmaschine nach Anspruch 1, **dadurch gekennzeichnet, dass** der genannte Tisch (300) entlang der beiden waagrechten quer verlaufenden Schienen (210 und 220) bewegt wird mittels eines einzigen Linearmotors (500), der auf Höhe des unteren Balkens (210a) für die untere Schiene (210) angeordnet ist, wobei die obere Schiene (220) als Führung dient, die ohne positive Abstützung auf dem Steg des oberen Querbalkens (220a) angeordnet ist.

6. Werkzeugmaschine nach Anspruch 1, **dadurch gekennzeichnet, dass** der vordere Abschnitt (100b) des Schlittens (100) frei von Antriebsteilen ist und eine teleskopische Stirnwand (600) durchsetzt entsprechend den Bewegungen des Schlittens, wobei sie die Antriebsstation von der Bearbeitungsstation trennt.

7. Werkzeugmaschine nach Anspruch 4, **dadurch gekennzeichnet, dass** der genannte Spindelkasten (400) entlang der beiden senkrechten quer verlaufenden Schienen (310 und 320) des Tisches (300) betätigt wird mittels zweier Linearmotoren (500), die einander gegenüberliegend auf den beiden seitlichen Stützen (320a und 320b) des Tisches (300) beidseits der mittigen Öffnung (330) angeordnet sind und **dadurch gekennzeichnet, dass** die genannten längs verlaufenden Führungsschienen (410 und 420) sowie die Sekundärblöcke (510) der beiden Linearmotoren (500) des Spindelkastens (400) sich über die gesamte Länge des Spindelkastens (400) erstrecken, während Gleitstücke (110 und 120), die entlang der Schienen und der Primärblöcke (520) der gleichen Linearmotoren verschiebbar sind, dem Schlitten (100) entlang eines hinteren Abschnitts (100a) zugeordnet sind.

8. Werkzeugmaschine nach Anspruch 6, **dadurch gekennzeichnet, dass** der vordere Abschnitt (100b) des Schlittens (100) eine zylindrische Form aufweist und eine kreisförmige in der teleskopischen Stirnwand (600) vorgesehene Öffnung durchsetzt.

9. Werkzeugmaschine nach Anspruch 8, **dadurch gekennzeichnet, dass** die Abdichtung der Gleitverbindung zwischen dem Schlitten (100) und der teleskopischen Stirnwand (600) durch eine kreisförmige Dichtung gewährleistet ist.
